Europäisches Patentamt

European Patent Office

Office européen des brevets

(19)

(11) Publication number : **0 098 715 B2**

# (12) NEW EUROPEAN PATENT SPECIFICATION

(45) Date of publication of the new patent specification : **29.06.94 Bulletin 94/26**

(51) Int. Cl.⁵ : **G05B 19/407**

(21) Application number : **83303616.3**

(22) Date of filing : **23.06.83**

(54) **Spindle speed control method and apparatus.**

(30) Priority : **24.06.82 JP 108867/82**

(43) Date of publication of application :
**18.01.84 Bulletin 84/03**

(45) Publication of the grant of the patent :
**16.01.91 Bulletin 91/03**

(45) Mention of the opposition decision :
**29.06.94 Bulletin 94/26**

(84) Designated Contracting States :
**DE FR GB**

(56) References cited :
**EP-A- 0 010 935
DE-A- 2 902 632
US-A- 3 943 799
US-A- 4 148 231
US-A- 4 314 340
US-A- 4 324 153
Programmieranleitung Bosch CNC,micro
8,März 1982,Seite 145.**

(73) Proprietor : **FANUC LTD.
3580, Shibokusa Aza-Komanba, Oshino-mura
Minamitsuru-gun, Yamanashi 401-05 (JP)**

(72) Inventor : **Kishi, Hajimu
Hinohirayamadai-Jutaku 1104
6-7-8, Asahigaoka
Hino-shi Tokyo (JP)**
Inventor : **Tanaka, Kunio
Nishihachioji-Haitsu C-7-9
711, Sanda Higashi-cho
Hachioji-shi Tokyo (JP)**
Inventor : **Takegahara, Takashi
Shanbohru-Hachioji 604
4-1-9, Myojin-cho
Hachioji-shi Tokyo (JP)**

(74) Representative : **Billington, Lawrence Emlyn et al
HASELTINE LAKE & CO
Hazlitt House
28 Southampton Buildings
Chancery Lane
London WC2A 1AT (GB)**

EP 0 098 715 B2

## Description

This invention relates to a spindle speed control method and apparatus for an NC machine tool, and more particularly to such method and apparatus in which the speed ranges for respective gears are selected in advance so that the speed ranges corresponding to neighboring gears overlap one another.

In NC machine tools, the spindle speed is commanded by an S-function instruction from a numerical control device. The spindle speed is required to have a wide speed range. Gear means are used in a known manner so that this wide speed range is covered by a single electric motor.

The desired gears are selected in advance by an M-function instruction in accordance with the commanded spindle speed so that the spindle is rotated at the commanded spindle speed.

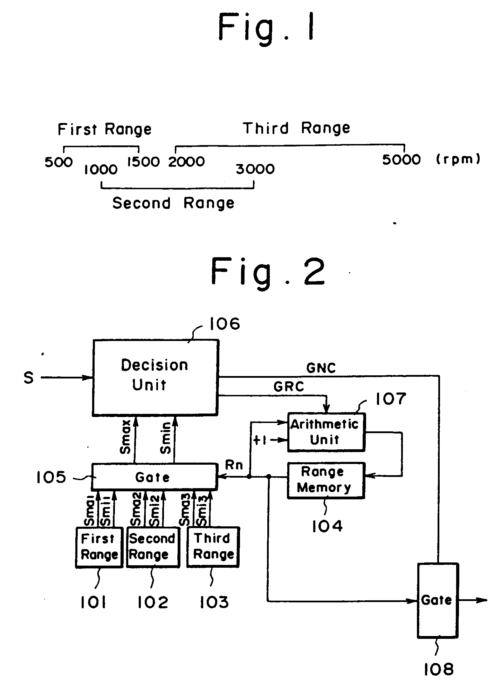

In Fig. 1, the relation between spindle speed ranges and the corresponding gear ranges (i.e. gears) is shown. The first gear covers the speed range between 500 and 1500 rpm, the second gear covers the sped range between 1000 and 3000 rpm, and the third gear covers the speed range between 2000 and 5000 rpm. The speed ranges of neighboring gears overlap one another as shown.

When the speed ranges of neighboring gears overlap one another in this manner, care must be taken or the number of times the gears are switched will be unnecessarily high, thus affecting the machining time. This is because conventionally, for controlling the rotational speed of the spindle of an NC machine tool to which the present invention is applicable, a spindle speed is commanded by an S-function instruction, and the gears are switched according to an M-function instruction which corresponds to the commanded spindle speed. According to the conventional control method, it is not determined which gear is selected at present each time a spindle speed is commanded, but gears are successively checked from a low-speed gear upwards until the lowest gear selectable for the commanded speed is determined and then selected, with the result that the gears are required to be switched frequently. This method of determining and then selecting a gear is disadvantageous in that the time necessary for the control of the spindle rotational speed is unnecessarily long. This is because when a spindle speed is commanded by an S-function instruction, an M-function instruction for selecting the appropriate spindle gear on the above basis is given from a numerical control device to the machine tool, and the machining operation of the machine tool is suspended until an M-function completion signal is subsequently sent from the machine tool back to the numerical control device.

It can thus be understood that operation involving a high frequency of gear switching will prolong the time necessary for changing the spindle speed and, hence, prolong the machining time. It is therefore necessary to minimize the number of times gear switching is performed. However, the conventional system involves switching gears a large number of times, as has been explained. More specifically, for example with referenced to Figure 1, when the spindle is currently rotating at 1800 rpm in the second gear range, and a newly commanded spindle speed is 1300 rpm, included in the overlapping speed range of the first and second gears, conventionally a gear change is made to the first gear. The reason is that the gear to which the commanded spindle speed belongs is determined and then selected starting from the lower gear, as described hereinbefore. Thus, whether the commanded spindle speed is provided by the first, second or third gear is decided in this order and is based on a negative decision regarding the respective preceding ranges. Thus, when the spindle is rotating at 3100 rpm in the third range, and the newly commanded spindle speed is 2950 rpm which is included in the range overlapping the second and third ranges, the gear is switched from the third gear to the second gear.

In actuality, however, gear changes are not required for speed changes from 1800 rpm to 1300 rpm or from 3100 rpm to 2950 rpm.

According to one aspect of the present invention there is provided a method of controlling spindle speed in an NC machine tool employing spindle drive gears providing predetermined respective speed ranges such that the speed ranges of neighboring gears overlap one another, the method being to select a gear which can provide a commanded spindle speed and said method comprising the steps of:

(a) storing data identifying the currently selected gear;

(b) deciding whether a newly commanded spindle speed falls within the speed range of the stored currently selected gear;

(c) controlling the spindle speed without making a gear change when the newly commanded spindle speed is found to fall within the speed range of the stored currently selected gear as a result of the decision in step (b) above, even when the newly commanded spindle speed also falls within the speed range of an adjacent gear and irrespective of whether this adjacent gear is higher or lower than the stored currently selected gear; or

(d) finding a gear providing a speed range which the newly commanded spindle speed falls and switching to this gear when the newly commanded spindle speed is found not to fall within the speed range of the stored currently selected gear as a result of the decision in step (b) above.

According to a further aspect of the present invention there is provided an apparatus for controlling spindle speed for a drive of an NC machine tool in which speed ranges obtainable with respective spindle drive gears are determined in advance such that the speed ranges obtainable with neighboring gears overlap one another, the apparatus being operable to select a gear conforming to a commanded spindle speed and comprising:

a) memory means for storing minimum and maximum speeds obtainable with the respective gears;

b) gear memory means for storing data identifying the current gear;

c) gate means responsive to a newly commanded spindle speed S for delivering the minimum and maximum speeds of the current gear stored in said gear memory means;

d) decision means responsive to the output from said gate means for deciding whether the newly commanded spindle speed S falls within the speed range of the current gear, based on said minimum and maximum speeds and said commanded spindle speed;

e) means for delivering a signal, indicating that a gear change is not required when the newly commanded spindle speed is found to fall within said range as a result of a decision in said decision means, even when the newly commanded spindle speed also falls within the speed range ot an adjacent gear and irrespective of whether this adjacent gear is higher or lower than the stored currently selected gear; and

f) gear change control means for finding a gear which can provide said newly commanded spindie speed, when the commanded spindle speed is found not to fall within said range as a result of a decision in said decision means, and switching to the gear thus found.

Examples of the present invention may provide a method and apparatus for controlling spindle speed, according to which the frequency of making gear changes in the foregoing cases is minimized.

An example of the present invention provides a method and apparatus for controlling spindle speed, in which a gear change is not made in a case where the spindle speed is changed but the newly commanded spindle speed is included within the current gear speed range, thus reducing the time necessary for switching the spindle speed.

According to a preferred example of the present invention, in instances where the speed ranges of the respective gears are selected in advance, and the gears of the gear speed ranges conforming to the commanded spindle speed are selected for rotating the spindle at the commanded spindle speed, the gear speed range of the currently selected gears is stored in memory. It is then decided to which of the gear speed ranges a newly commanded spindle speed belongs, and whether the commanded spindle speed belongs to the speed range of the stored gear. If the commanded spindle speed has been decided as belonging to the speed range of the stored gear, the spindle speed is controlled without making any gear change. If otherwise, the gear speed range to which the newly commanded speed belongs is found and the gear is switched to the gear thus found.

Brief description of the drawings

Fig. 1 is a diagrammatical view showing the relation between gears and speed ranges;

Fig. 2 is a block diagram showing a preferred embodiment of the present invention; and

Fig. 3 is a flow chart showing spindle speed control according to the present invention.

Fig. 2 is a block diagram showing a preferred embodiment of the present invention. A minimum speed $Smi1$ and a maximum speed $Sma1$ for the first gear are stored in a first range memory 101, while a minimum speed $Smi2$ and a maximum speed $Sma2$ for the second gear are stored in a second range memory 102. Similarly, a minimum speed $Smi3$ and a maximum speed $Sma3$ are stored in a third range memory 103. The current speed range, and thus the first, second or third gear, is stored in a range memory 104 constituted by a ternary register. Thus, when the data stored in the range memory 104 is "01", "10" or "11", the first, second or third gears are stored in the memory 104, respectively. When a new spindle speed S is commanded, the minimum and maximum speeds Smin and Smax for-the current gear stored in the range memory 104 are delivered to a decision unit 106. Using Smax, Smin and the commanded spindle speed S, the unit 106 decides whether the equation

$$Smin \leqq S \leqq Smax \quad (1)$$

holds. If the equation (1) does hold, a signal GNC, indicating that a gear change is not required, is delivered by the decision unit 106. In response to the signal GNC, the gear speed range Rn stored in the range memory 104 is delivered through a gate 108 to a gear change control unit, not shown. Thus, no gear change is made.

If the equation (1) does not hold, a gear range change signal GRC is delivered from the decision unit 106. Upon receiving the gear range change signal GRC, an arithmetic unit 107 adds +1 to the current range Rn stored in the range memory 104, in other words, it performs an operation

$$Rn + 1 \rightarrow Rn \quad (2)$$

and the result of the operation is stored in the range memory 104. The gate 105 is now in a position to supply the decision unit 106 with the minimum and maximum speeds of the speed range stored in the range memory 104. From this time on, the speed range to which the commanded spindle between S belongs is delivered ultimately through gate 108 by a sequence of operations similar to those described above. It should be noted that the minimum and maximum speeds enter the decision unit 106 in the order of the first, second and third gears, the second, third and first gears, or the third, first and second gears, depending on whether the current gear is the first, second or third gear, respectively.

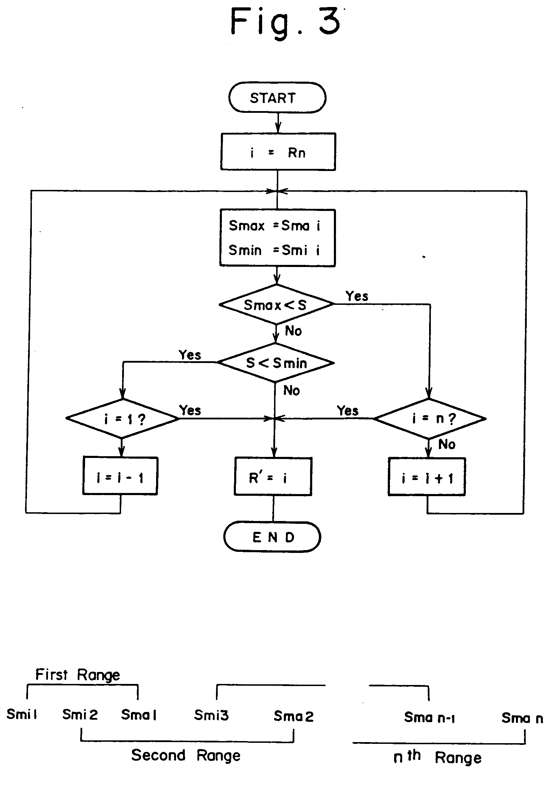

Fig. 3 shows a flow chart indicating the sequence for controlling spindle speed according to the present invention. First, the currently selected gear Rn is stored. Then; the maximum speed Smai and the minimum speed Smii of the ith range, that is, the gear to which the currently commanded spindle speed belongs, are stored. When a new spindle speed S is commanded, it is decided whether the new spindle speed S belongs to the currently stored gear Rn. If affirmative, that is, if the new spindle speed S is not larger than the maximum speed Smax of the gear Rn and not smaller than the minimum speed Smin of said gear, the spindle speed is controlled within the current range without making a gear change. If negative, and if the new spindle speed S is larger than the maximum speed Smax of the aforementioned gear Rn, then the gear change is made to Rn+1 and, thus, to a range of an order higher than that of the gear Rn. If the spindle speed S is less than the minimum speed Smin of the aforementioned gear Rn, the gear change is made to Rn-1 and, thus, to a speed range of an order lower than that that of the gear Rn. In the drawing, n designates the gear number, R′ the gear to be selected next, Smin the minimum speed of the nth gear and Smax the maximum speed of the nth gear.

From the foregoing, it is seen that, when the spindle speed is changed, it is decided first of all whether-thecommanded spindle speed belongsto the current gear speed range and, if affirmative, no gear change is made. Hence, contrary to the prior-art system, a gear change is not executed when the spindle speed is changed from 1800 to 1300 rpm or from 3100 to 2950 rpm. It is sufficient to change the speed within the current gear speed range, that is, within the second or third gear speed range, respectively, thus making it possible to reduce the time required in switching the spindle speed.

The present system is of the type in which the signal GNC is supplied when it is not necessary to make a gear change. However, the present system may be applied to a case in which the gear change signal is supplied only when a gear change is required.

**Claims**

1.  A method of controlling spindle speed in an NC machine tool employing spindle drive gears providing predetermined respective speed ranges such that the speed ranges of neighboring gears overlap one another, the method being to select a gear which can provide a commanded spindle speed and said method comprising the steps of:

    a) storing data identifying the currently selected gear;

    b) deciding whether a newly commanded spindle speed falls within the speed range of the stored currently selected gear;

    c) controlling the spindle speed without making a gear change when the newly commanded spindle speed is found to fall within the speed range of the stored currently selected gear as a result of the decision in step b) above, even when the newly commanded spindle speed also falls within the speed range of an adjacent gear and irrespective of whether this adjacent gear is higher or lower than the stored currently selected gear; or

    d) finding a gear providing a speed range within which the newly commanded spindle speed falls and switching to this gear when the newly commanded spindle speed is found not to fall within the speed range of the stored currently selected gear as a result of the decision in step b) above.

2.  The method as claimed in Claim 1, wherein said step d) comprises
    selecting a gear of an order higher than the currently selected gear when the newly commanded spindle speed is larger than the maximum speed provided by said currently selected gear.

3.  The method as claimed in Claim 1 or 2, wherein said step d) comprises
    selecting a gear of an order lower than the currently selected gaer when the newly commanded spindle speed is lower than the minimum speed provided by said currently selected gear.

4.  An apparatus for controlling spindle speed for a drive of an NC machine tool in which speed ranges obtainable with respective spindle drive gears are determined in advance such that the speed ranges obtainable with neighboring gears overlap one another, the apparatus being operable to select a gear conforming to a commanded spindle speed and comprising:

    a) memory means (101, 102, 103) for storing minimum and maximum speeds obtainable with the respective gears;

    b) gear memory means (104) for storing data identifying the current gear;

    c) gate means (105) responsive to a newly commanded spindle speed S for delivering the minimum and maximum speeds of the current gear stored in said gear memory means;

    d) decision means (106) responsive to the output from said gate means (105) for deciding whether the newly commanded spindle speed S falls within the speed range of the current gear, based on said minimum and maximum speeds and said commanded spindle speed;

e) means (106) for delivering a signal, indicating that a gear change is not required when the newly commanded spindle speed is found to fall within said range as a result of a decision in said decision means (106), even when the newly commanded spindle speed also falls within the speed range of an adjacent gear and irrespective of whether this adjacent gear is higher or lower than the stored currently selected gear; and

f) gear change control means for finding a gear which can provide said newly commanded spindle speed, when the commanded spindle speed is found not to fall within said range as a result of a decision in said decision means (106), and switching to the gear thus found.

**Patentansprüche**

1. Verfahren zum Steuern einer Spindeldrehzahl in einer numerisch gesteuerten Werkzeugmaschine (NC machine tool) unter Verwendung von Spindelantriebsgängen, die jeweilige vorbestimmte Drehzahlbereiche derart erzeugen, daß die Drehzahlbereiche benachbarter Gänge einander überlappen, wobei das Verfahren so ist, daß ein Gang, der eine geforderte Spindeldrehzahl erzeugen kann, ausgewählt wird, und wobei das Verfahren die Schritte

a) eines Speicherns von den derzeit ausgewählten Gang kennzeichnenden Daten,

b) eines Entscheidens, ob eine neu geforderte Spindeldrehzahl in den Drehzahlbereich des derzeit ausgewählten, gespeicherten Ganges fällt,

c) eines Steuerns der Spindeldrehzahl ohne Ausführen eines Gangwechsels, wenn als Ergebnis der Entscheidung im obigen Schritt b) die neu geforderte Spindeldrehzahl als in den Drehzahlbereich des derzeit ausgewählten, gespeicherten Ganges fallend vorgefunden wird, selbst wenn die neu geforderte Spindeldrehzahl auch in den Drehzahlbereich eines benachbarten Ganges fällt und unabhängig davon, ob dieser benachbarte Gang höher oder niedriger ist als der gespeicherte derzeit ausgewählte Gang, oder

d) eines Auffindens eines einen Drehzahlbereich, in welchen die neu geforderte Spindeldrehzahl fällt, erzeugenden Ganges und eines Schaltens in diesen Gang, wenn als Ergebnis der Entscheidung im obigen Schritt b) die neu geforderte Spindeldrehzahl als nicht in den Drehzahlbereich des derzeit ausgewählten, gespeicherten Ganges fallend vorgefunden wird,

aufweist.

2. Verfahren nach Anspruch 1, wobei der Schritt d), ein Auswählen eines Ganges mit einer im Vergleich zum derzeit ausgewählten Gang höheren Ordnung aufweist, wenn die neu geforderte Spindeldrehzahl größer als die durch den derzeit ausgewählten Gang erzeugte maximale Drehzahl ist.

3. Verfahren nach Anspruch 1 oder 2, wobei der Schritt d), ein Auswählen eines Ganges mit einer im Vergleich zum derzeit ausgewählten Gang niedrigeren Ordnung aufweist, wenn die neu geforderte Spindeldrehzahl niedriger als die durch den derzeit ausgewählten Gang erzeugte minimale Geschwindigkeit ist.

4. Vorrichtung zum Steuern einer Spindeldrehzahl für einen Antrieb einer numerisch gesteuerten Werkzeugmaschine (NC machine tool), wobei durch jeweilige Spindelantriebsgänge erhältliche Drehzahlbereiche im voraus derart bestimmt sind, daß die von benachbarten Gängen erhältlichen Drehzahlbereiche einander überlappen, wobei die Vorrichtung derart betreibbar ist, daß sie einen mit einer geforderten Spindeldrehzahl übereinstimmenden Gang auswählt, und mit

a) einer Speichereinrichtung (101,102,103) zum Speichern der durch die zugeordneten Gänge erhältlichen minimalen und maximalen Drehzahlen,

b) einer Gangspeichereinrichtung (104) zum Speichern von den derzeitigen Gang kennzeichnenden Daten,

c) einer auf eine neu geforderte Spindeldrehzahl (S) ansprechende Toreinrichtung (105) zum Ausgeben der minimalen und maximalen Drehzahl des in der Gangspeichereinrichtung gespeicherten derzeitigen Ganges,

d) einer auf das Ausgangssignal der Toreinrichtung (105) ansprechende Entscheidungseinrichtung (106) zum Entscheiden auf der Basis der minimalen und maximalen Drehzahl der befohlenen Spindeldrehzahl, ob die neu geforderte Spindeldrehzahl (S) in den Drehzahlbereich des derzeitigen Ganges fällt,

e) einer Einrichtung (106) zum Ausgeben eines Signals, welches anzeigt, daß ein Gangwechsel nicht erforderlich ist, wenn als Ergebnis einer Entscheidung in der Entscheidungseinrichtung (106) die neu geforderte Spindeldrehzahl als in den Bereich fallend vorgefunden ist, auch wenn die neu geforderte Spindeldrehzahl in den Drehzahlbereich des benachbarten Ganges fällt und unabhängig davon, ob dieser benachbarte Gang höher oder niedriger ist als der gespeicherte derzeit ausgewählte Gang, und

f) einer Gangwechselsteuereinrichtung zum Auffinden eines Ganges, der die neu geforderte Spindeldrehzahl erzeugen kann, wenn die geforderte Spindeldrehzahl als Ergebnis einer Entscheidung in der Entscheidungseinrichtung (106) als nicht in den Bereich fallend vorgefunden ist, und zum Schalten des so gefundenen Ganges.

**Revendications**

1. Une méthode de commande de la vitesse d'une broche dans une machine outil à CN utilisant des engrenages d'entraînement de broche à la condition que des plages de vitesse respectives prédéterminées telles que les plages de vitesse d'engrenage voisin se chevauchent mutuellement, la méthode consistant à sélectionner un engrenage qui peut fournir une vitesse de broche commandée et ladite méthode comprenant les étapes consistant à :

a) mémoriser des données identifiant l'engrenage couramment sélectionné ;

b) décider si une vitesse de broche nouvellement commandée est comprise dans la plage de vitesse de l'engrenage couramment sélectionné mémorisé ;

c) commander la vitesse de broche sans réaliser de changement d'engrenage lorsque la vitesse de broche nouvellement commandée est trouvée être comprise dans la plage de vitesse de l'engrenage couramment sélectionné mémorisé en résultat de la décision prise au cours de l'étage b) ci-dessus, même lorsque la vitesse de broche nouvellement commandée est également comprise dans la plage de vitesse d'un engrenage adjacent et quel que soit le fait que cet engrenage adjacent est supérieur ou inférieur à l'engrenage couramment sélectionné mémorisé ; ou

d) trouver un engrenage fournissant une plage de vitesse dans laquelle est comprise la vitesse de broche nouvellement commandée et commuter sur cet engrenage lorsque la vitesse de broche nouvellement commandée est trouvée ne pas être comprise dans la plage de vitesse de l'engrenage couramment sélectionné mémorisé en résultat de la décision prise au cours de l'étape b) ci-dessus.

2. La méthode selon la revendication 1, dans laquelle ladite étape d) comprend :

la sélection d'un engrenage d'un ordre supérieur à l'engrenage couramment sélectionné lorsque la vitesse de broche nouvellement commandée est supérieure à la vitesse maximale assurée par ledit engrenage couramment sélectionné.

3. La méthode selon la revendication 1 ou 2, dans laquelle ladite étape d) comprend :

la sélection d'un engrenage d'un ordre inférieur à l'engrenage couramment sélectionné lorsque la vitesse de broche nouvellement commandée est inférieure à la vitesse minimale assurée par ledit engrenage couramment sélectionné.

4. Un dispositif pour commander la vitesse d'une broche pour un entraînement de machine outil à CN, dans lequel des plages de vitesse qui peuvent être obtenues avec des engrenages d'entraînement de broche respectifs sont déterminées à l'avance de façon telle que les plages de vitesse pouvant être obtenues avec des engrenages voisins se chevauchent mutuellement, le dispositif pouvant être commandé pour sélectionner un engrenage conforme à une vitesse de broche commandée et comprenant :

a) un moyen de mémoire (101, 102, 103) servant à mémoriser des vitesses minimale et maximale pouvant être obtenues avec les engrenages respectifs ;

b) un moyen de mémoire d'engrenage (104) servant à mémoriser des données identifiant l'engrenage en cours ;

c) un moyen de porte (105) sensible à une vitesse de broche nouvellement commandée S pour délivrer les vitesses minimale et maximale de l'engrenage en cours mémorisées dans ledit moyen de mémoire d'engrenage ;

d) un moyen de décision (106) sensible à la sortie provenant dudit moyen de mémoire (105) pour décider si la vitesse de broche nouvellement commandée S est comprise dans la plage de vitesse de l'engrenage en cours sur la base desdites vitesses minimale et maximale et de ladite vitesse de broche commandée ;

e) des moyens (106) pour délivrer un signal indiquant qu'un changement d'engrenage n'est pas requis lorsque la vitesse de broche nouvellement commandée est trouvée être comprise dans ladite plage en résultat d'une décision prise dans ledit moyen de décision (106), même lorsque la vitesse de broche nouvellement commandée est également comprise dans la plage de vitesse d'un engrenage adjacent et quel que soit le fait que cet engrenage adjacent est supérieur ou inférieur à l'engrenage couramment sélectionné mémorisé ; et

f) un moyen de commande de changement d'engrenage servant à trouver un engrenage qui peut assurer ladite vitesse de broche nouvellement commandée lorsque la vitesse de broche commandée est trouvée ne pas être comprise dans ladite plage en résultat d'une décision prise dans ledit moyen de décision (106) et commutant sur l'engrenage ainsi trouvé.

# Fig. 1

First Range      Third Range

500   1000   1500   2000      3000      5000   (rpm)

Second Range

# Fig. 2

# Fig. 3

```
        START
          |
      i = Rn
          |
   +----->+
   |      |
   | Smax = Sma i
   | Smin = Smi i
   |      |
   |  Smax < S ----Yes----+
   |      |No             |
   |  S < Smin --Yes--+   |
   |      |No         |   |
   | i=n?<---Yes  Yes->i=1?   i=n?
   |  |No        |         |
   | i=i+1     R'=i      i=i-1
   |            |
   +------------+
              END
```

```
        First Range
      +-----------+
Smi1   Smi2   Sma1   Smi3   Sma2        Sma n-1   Sma n
          +-------------------+            +-----------+
            Second Range                    n th Range
```